# EUROPEAN PATENT SPECIFICATION

(11) **EP 0 785 982 B1**
(45) Date of publication and mention of the grant of the patent: **01.07.1998**
(21) Application number: 95934363.3
(22) Date of filing: 24.08.1995
(51) Int. Cl.: C11D 3/39, C01B 15/10

(54) **BLEACHING AGENT**
BLEICHMITTEL
AGENT DE BLANCHIMENT

(30) Priority: 07.10.1994 WO PCT/SE94/00943; 07.10.1994 WO PCT/SE94/00944; 03.11.1994 SE 9403778
(43) Date of publication of application: 30.07.1997
(73) Proprietor: Eka Chemicals AB, 445 80 Bohus (SE)
(72) Inventor: LAGNEMO, Hans, S-417 28 Göteborg (SE); JIGSTAM, Monica, S-423 41 Torslanda (SE); ODDSTIG, Cecilia, S-414 58 Göteborg (SE)
(74) Representative: Jönsson, Christer
(86) International application number: PCT/SE95/00959
(87) International publication number: WO 96/11252

(56) References cited:
- EP-A- 0 546 815
- EP-A- 0 634 482
- US-A- 3 977 988

## Description

The present invention relates to particles comprising a peroxy compound and a dicarboxylic acid having from 5 to 10 carbon atoms or a salt thereof. The invention also relates to use of the particles and a composition containing such particles.

Powder detergent compositions often contain peroxy compounds as bleaching agents which release hydrogen peroxide or peroxy acids in aqueous solutions. However, many peroxy compounds are not storage stable. Their decomposition is supposed to be catalysed by metal cations moving comparatively freely through the water normally being present in detergents, but is also facilitated by the alkaline pH (normally from about 8 to about 12) and by other components commonly present in detergents, for example zeolites or bleaching activators such as TAED (tetraacetylethylene diamine), TAGU (tetraacetylglycoluril) or PAG (penta acetyl glucose).

In order to make environmental friendly detergents, it is desirable to use alkali metal carbonate peroxy hydrate, commonly known as percarbonate, as a bleaching agent. However, the activity of percarbonate in a detergent decreases rapidly through decomposition if the detergent is stored at normal room temperature and humidity.

Many attempts to stabilize percarbonate have been done, for example by mixing or coating with stabilizing substances such as sulfates, carbonates, borates, silicates or organic substances. Such stabilizing methods are described in the patent literature, for example in GB-A-1466799, GB-A-1538893, GB-A-1575792, EP-A-459625, US-A-3975280 and EP-A-573731.

US-A-4075116 describes preparation of percarbonate from sodium carbonate, hydrogen peroxide and different additives.

CH-A- 659082 describes mixing bleaching agents with high amounts of inorganic carbonates and water soluble acids and thereby increasing the dissolution rate.

Japanese laid open patent application (Kokai) Sho 58-74508 describes a mixing percarbonate with silicate and phosphate, borate, citrate, tartrate or succinate of sodium and thereby increasing the dissolution rate.

US-A-5340496 describes stabilization of percarbonate with certain combinations of inorganic salts and carboxylic acids, particularly long chained acids such as oleic acid.

The object of the present invention is to provide particles comprising a peroxy compound, particularly alkali metal percarbonate, with improved storage stability, particularly in detergent compositions. It is another object of the invention to provide particles comprising a peroxy compound only containing environmental friendly constituents.

Through the present invention, these objects has been fulfilled by providing particles comprising a peroxy compound with capability of releasing hydrogen peroxide or peroxy acids in aqueous solutions, the particles further comprising up to 15% by weight, preferably up to 10% by weight, most preferably up to 5% by weight of a preferably water soluble dicarboxylic acid having from 5 to 10 carbon atoms or a salt thereof. The particles preferably comprise more than 0.01% by weight, most preferably more than 0.05% by weight of such a dicarboxylic acid or a salt thereof. The amount of the peroxy compound in the particles is suitably from 10 to 99% by weight, preferably more than 50% by weight and most preferably up to 95% by weight. The dicarboxylic acid in the particles may be mixed with the peroxy compound and/or be included in a coating.

It is assumed that the dicarboxylic acid acts as a chelating agent, but it has surprisingly been found that the dicarboxylic acids according to the invention gives superior storage stability compared to conventional chelating agents such as EDTA. Too high a concentration of dicarboxylic acids or salts thereof will however decrease the thermal stability, particularly at high concentrations of the peroxy compounds.

It is preferred to use an alkali metal or an alkaline earth metal salt of the dicarboxylic acid. Alkali metals are preferably selected from sodium, potassium or mixtures thereof, and alkaline earth metals are preferably selected from calcium, magnesium or mixtures thereof. Sodium salts are particularly preferred. In the following description of the invention, the term dicarboxylic acid also refers to salts thereof.

Suitably, the dicarboxylic acid comprises from 5 to 8 carbon atoms, preferably 5 to 7 carbon atoms. Preferably, the carboxylic acid groups are located at the ends of the carbon chain. Further, the dicarboxylic acid preferably does not comprise any hydroxyl groups and most preferably it does not comprise any functional groups except the carboxylic acid groups.

The most preferred dicarboxylic acids satisfy the formula:

COOH - R - COOH

in which R is alkylene, which is preferred, or alkenylene, having from 3 to 8 carbon atoms, preferably from 3 to 5 carbon atoms. Preferably, R is a straight chain without branches.

Examples of useful dicarboxylic acids are glutaric acid adipic acid, pimelic acid, suberic acid, azelaic acid, sebacic acid and mixtures thereof, of which glutaric acid, adipic acid and pimelic acid are particularly preferred. Glutaric acid is the most preferred acid.

It is to be understood that the particles may include two or more different dicarboxylic acids as described herein. The particles may also include other environmentally acceptable stabilizers or inert substances.

The particles preferably contain silicate which further improves the stability and also enhances the mechanical strength. Silicate may be mixed with the peroxy compound and/or be included in a coating. Preferably at least some of the silicate is mixed with the peroxy compound. The silicate is suitably an alkali metal silicate, preferably of sodium, potassium or mixtures thereof, most preferably of sodium. The molar ratio SiO₂:M₂O, M being an alkali metal, is preferably from 1 to 3, most preferably from 1 to 2.5. The particles suitably contains from 0.1 to 20% by weight, preferably from 0.2 to 15% by weight, most preferably from 0.5 to 10% by weight of silicate expressed as sodium silicate.

It has been found that the stability is further improved if the particles contain a water soluble magnesium compound, preferably magnesium sulfate. The magnesium compound may be mixed with the peroxy compound and/or be included in a coating. Preferably at least some of the magnesium is mixed with the peroxy compound, most preferably in combination with alkali metal silicate. The particles preferably contains from 0.01 to 5% by weight, most preferably from 0.1 to 3% by weight of magnesium compounds expressed as magnesium sulfate.

According to an embodiment of the invention, it has been found that a synergistic effect appears if the particles also comprise a chelating agent selected from hydroxy carboxylic acids satisfying the formula:

R'CₙHₘ(OH)ₙCOOH

in which R' is CH₂OH or COOH, n is 2-6, and m is 0-n; or salts thereof.

It is preferred to use an alkali metal or an alkaline earth metal salt of the hydroxy carboxylic acid. Alkali metals are preferably selected from sodium, potassium or mixtures thereof, and alkaline earth metals are preferably selected from calcium, magnesium or mixtures thereof. Sodium salts are particularly preferred. In the following description of the invention, the term hydroxy carboxylic acid also refers to salts thereof.

The particles preferably contain from about 0.01 to about 15% by weight, most preferably from about 0.01 to about 10% by weight, particularly preferably from about 0.05 to about 5% by weight of hydroxy carboxylic acids of the above formula. The weight ratio dicarboxylic acid to hydroxy carboxylic acid is preferably from 0.05:1 to 4:1, most preferably from 0.1:1 to 1:1. The hydroxy carboxylic acid may be mixed with the peroxy compound and/or be included in a coating.

Preferably R'in the above formula is CH₂OH. It is also preferred that n is 4 or 5. Preferably, m is equal to n or n-2, the carbon chain thus being saturated or containing one double bond. A particularly preferred hydroxy carboxylic acid is glucoheptonic acid (R' is CH₂OH, n and m are 5) or alkali metal salts thereof. Other preferred salts of hydroxy carboxylic acids are alkali metal gluconate (R'is CH₂OH, n and m are 4) and alkali metal ascorbate (R'is CH₂OH, n is 4 and m is 2). Other useful hydroxy carboxylic acids include, for example, trihydroxy glutaric acid, tartaric acid or saccharic acid. It is to be understood that the particles may include two or more different hydroxy carboxylic acids of the above formula.

Particles according to the invention have high stability even if uncoated, but the highest stability is normally achieved if the particles are coated. Such a coating may for example contain one or more dicarboxylic acid as described herein, hydroxy carboxylic acids as described herein, alkali metal silicate, water soluble magnesium compounds such as magnesium sulfate, alkali metal salts of carbonate, bicarbonate or sulfate, or environmental acceptable organic chelating agents, the different components being applied in one or several layers.

In one embodiment of the invention, a dicarboxylic acid as described herein is only present as mixed with the peroxy compound while a hydroxy carboxylic acid as described herein is only present in a coating, or vice versa.

In another embodiment both a dicarboxylic acid as described herein and a hydroxy carboxylic acid as described herein are mixed with the peroxy compound and/or are included in a coating.

Suitably, the particles have an average diameter from 50 to 3000 µm, preferably from 100 to 1600 µm. The preferred density is from 600 to 1500 g/l, particularly from 800 to 1100 g/l. It has been found that a high density as well as a high average particle size improves the storage stability.

The invention is particularly advantageous if the peroxy compound is alkali metal percarbonate, but also other peroxy compounds can be stabilized, for example alkali metal salts of perborates, peroxysulfates, peroxyphosphates or peroxysilicates, peroxycarboxylic acids or peroxycarboxylic acid releasing compounds such as di-acylated di-peroxy carboxylic acids (see WO 91/17143).

Particles according to the invention can be prepared by conventional methods. Ingredients to be mixed with the peroxy compound are preferably added in a granulation step, but may also be included directly when, for example, alkali metal percarbonate is produced from alkali metal carbonate and hydrogen peroxide. If alkali metal silicate is to be included, it is preferably added in the form of an aqueous solution, and the dicarboxylic acid or a salt thereof and optionally a hydroxy carboxylic acid or a salt thereof is then preferably mixed therein before addition to the peroxy compound. Granulation may be performed by conventional methods well known among those skilled in the art, such as compacting, extruding, agglomeration in drum or disk, fluid-bed granulation, prilling or in different kinds of mixers. An optional coating step may be performed by spraying the particles with preferably aqueous solutions of the components to be applied, for example in a drum or a fluid bed.

The invention further concerns use of the described particles comprising a peroxy compound and a dicarboxylic acid as a bleaching agent, preferably in connection with washing of textiles or dishwashing. The washing water may be supplied with particles according to the invention being included in a detergent composition or being in the form of a separate bleaching powder. Preferably, washing water is supplied with particles in an amount so to obtain from 0.001 to 1 gram active oxygen per litre, which for example corresponds to from 0.01 to 6 grams sodium percarbonate.

Finally, the invention concerns a composition containing an inert filler, and/or one or several substances active at washing, which composition further contains particles comprising a peroxy compound and a dicarboxylic acid according to the invention, for example in an amount from 1 up to almost 100% by weight. The composition may comprise a mixture of particles containing different kinds of peroxy compounds. The substances active at washing may include detergent builders, surfactants, alkali generating substances, bleaching activators, enzymes, or any other substances commonly used in detergents. The detergent builder may for example be selected from phosphates such as tripolyphosphates, pyrophosphates or orthophosphates of alkali metals or ammonium, zeolites such as Zeolite A (e.g. Zeolite 4A), Zeolite B, Zeolite P, Zeolite X, or Zeolite HS, Zeolite MAP, silicates such crystalline layered disilicates (e.g. of the formula NaMSIₓ₊₁·yH₂O wherein M is sodium or hydrogen, x is a number from 1.9 to 4 and y is a number from 0 to 20), amorphous disilicates (e.g. Britesil™), polycarboxylates, citrates, carbonates, bicarbonates, sesquicarbonates, sulfates, borates or mixtures thereof. The surfactants are preferably selected from anionic surfactants, nonionic surfactants, soaps or mixtures thereof. Anionic surfactants may for example be selected from linear alkylbenzene sulfonates, secondary alkane sulfonates, alphasulfonated methyl fatty acid esters, alkylsulfates, alcoholethoxysulfates, alpha-olefine sulfonates, alkali metal sarcosinates or alkyl ester sulfonates. Nonionic surfactants may for example be selected from alkoxylated compounds such as fatty alcohols, alkylphenols and alkylamines or from alkyl polyglucosides or polyhydroxy fatty acid amides. Soaps may for example be selected from sodium or potassium salts of tallow. Also cationic surfactants such as quaternary ammonium compounds or imide azolinium salts, as well as amphoteric surfactants might be used. Alkali generating substances may for example be selected from carbonates, silicates, phosphates or mixtures thereof. The bleaching activators may for example be selected from N- or O-acylated compounds such as TAED, TAGU, SNOBS (sodium nonoyl benzene sulfonate), PAG (penta acetyl glucose) or diacylated diperoxy carboxylic acids (see WO 91/17143). The filler may include any inert substance such as sodium sulfate. The composition may constitute a complete detergent or a bleaching powder to be added separately at washing. The enzymes may for example be selected from amylases, neutral and alkaline proteases, lipases, esterases or cellulases.

A complete detergent for washing of textiles suitably contains from 1 to 40% by weight, preferably from 10 to 30% by weight of particles according to the invention. Further, the detergent suitably contains a detergent builder, for example from 5 to 50% by weight, surfactants, for example from 5 to 35% by weight and an alkali generating substance, for example from 5 to 20% by weight. Preferably, the detergent contains from 5 to 20% by weight of anionic surfactants, from 2 to 15% by weight of nonionic surfactants, and from 0.1 to 5% by weight of soaps. The detergent may also contain bleaching activators, for example from 1 to 10% by weight, enzymes, for example from 0.5 to 2.5% by weight, and fillers such as sodium sulfate, for example from 5 to 50% by weight. It is also possible to include chelating agents such as phosphonates, EDTA, NTA (nitrilo triacetic acid), iminodiacetic acid derivatives or EDDS (ethylenediamine-N,N-disuccinic acid, for example in an amount from 0.1 to 1% by weight. Additionally, the detergent may contain conventional components such as water glass, carboxy methyl cellulose, dispersants such as homo or copolymers of polycarboxylic acids, foam regulators, antioxidants, perfumes, colouring agents, optical brighteners and water (normally from 3 to 15% by weight). The detergent can be prepared with conventional methods such as dry mixing, agglomeration or spray drying. If the preparation involves spray drying, any heat sensible component such as particles comprising peroxy compounds, enzymes and perfumes should be added to the dried material.

A separate bleaching powder may comprise up to almost 100% by weight of particles containing peroxy compounds according to the invention, but preferably the content is from 5 to 90% by weight. The bleaching powder may comprise only one peroxy compound or a mixture of particles containing different kinds of peroxy compounds. It is advantageous if a hydrogen peroxide generating substance such as percarbonate, for example from 10 to 75% by weight, is used in combination with a bleaching activator such as TAED or TAGU, for example from 2 to 25% by weight. Also other bleaching activators such as a diacylated dipercarboxylic acid may be used, for example in an amount from 2 to 25% by weight. A bleaching powder may also contain detergent builders, for example from 5 to 90% by weight, surfactants, for example up to 10% by weight, enzymes, for example up to 2% by weight, or fillers, for example from 5 to 90% by weight. A preferred bleaching powder consists essentially of from 30 to 75% by weight of particles containing percarbonate, from 10 to 25% by weight of a bleaching activator, the balance preferably substantially being detergent builders, fillers, surfactants, water or mixtures thereof.

A detergent for dishwashing may be in the form of a low alkaline detergent (pH of washing water intended to be about 10-11) suitably containing from 2 to 15% by weight of a bleaching agent comprising particles according to the invention, from 5 to 50% by weight of alkali metal disilicate, from 0 to 40% by weight of alkali metal carbonate, from 15 to 50% by weight of builders such as sodium citrate and polycarboxylates or sodium tri polyphosphate (STPP), from 0.5 to 5% by weight of low foaming nonionic surfactants, from 0.5 to 5% by weight of enzymes and from 1 to 6% by weight of bleaching activators such as TAED. A dishwasher detergent may also be high alkaline (pH of washing water intended to be about 11-12) having a similar composition as the low alkaline detergent, the disilicate however being replaced with from 20 to 80% by weight of alkali metal metasilicate and the builder preferably substantially consisting of STPP.

The present invention makes it possible to prepare stable bleaching agents comprising peroxy compounds, particularly percarbonate, which may be used in detergents including zeolites such as zeolite 4A. The invention also makes it possible to decrease or exclude the use of for example EDTA or phosphonates which are less suitable from an environmental point of view.

The invention will now be described through the following examples. If not otherwise stated, all contents an percentages refer to content and percent by weight based on the entire particle.

EXAMPLE 1: Sodium percarbonate particles with a diameter of about 315-1250 µm and a density of about 900 g/l were prepared by granulating fine percarbonate particles in a rotating Eirich drum together with different additives supplied as aqueous solutions and drying the granules in a fluidized bed. In order to test the storage stability of the percarbonate, the prepared particles as well as reference particles of pure sodium percarbonate were included in a standard detergent IEC-Z (Henkel) consisting of 9.7% linear alkyl benzenesulfonate (C_{average}11.5), 5.2% ethoxylated C₁₂₋₁₈alcohol (EO₇), 3.6% sodium-soap, 32.5% zeolite 4A, 11.8% sodium carbonate, 5.2% sodium salt of copolymerisate of acrylic- and maleic acid (Sokolan CP₅), 3.4% sodium waterglass (ratio 3.3), 1.3% carboxy methyl cellulose, 0.3% EDTA, 0.3% optical brightener (stilbene type), 7.4% sodium sulfate, 12.2% water, 6.5% foam inhibitor (SIK), 0.5% enzyme prills protease (activity 300.00). Samples were prepared from 64 grams IEC-Z, 12 grams percarbonate particles and 4 grams TAED. A Quick Stability Index (QSI) was determined for each sample by measuring the amount of oxygen formed during 24 hours storage at 40°C and dividing the amount oxygen liberated by the relative content (%) of active oxygen in the original percarbonate. Thus, a low QSI-value means high stability. The results appear in the table below, in which the contents of the different constituents refer to % by weight based on the entire particle. The following abbreviations are used: SPC = sodium percarbonate; GA = sodium salt of glutaric acid; GH = sodium glucoheptonate; AA = sodium salt of adipic acid; PA = sodium salt of pimelic acid; SDS = sodium disilicate; AO = active oxygen; QSI = quick stability index.

| SPC | GA | AA | PA | AO | QSI |
|---|---|---|---|---|---|
| * 100% | - | - | - | 14.5% | 5.66 |
| 98% | 2% | - | - | 14.1% | 2.64 |
| 98% | - | -2% | - | 14.3 | 2.09 |
| 98% | - | - | 2% | 14.1% | 2.38 |

| | | | | | |
|---|---|---|---|---|---|
| * Comparative Composition | | | | | |

EXAMPLE 2: Sodium percarbonate were prepared and tested as in Example 1. The results appear in the table below:

| SPC | GA | GH | SDS | MgSO₄ | AO | QSI |
|---|---|---|---|---|---|---|
| 97.2% | 1.5% | - | 1.2% | 0.1% | 14.0% | 2.28 |
| * 97.2% | - | 1.5% | 1.2% | 0.1% | 14.0% | 2.59 |
| 97.2% | 0.5% | 1.0% | 1.2% | 0.1% | 14.1% | 1.63 |
| 97.2% | 1.0% | 0.5% | 1.2% | 0.1% | 14.1% | 2.14 |

| | | | | | | |
|---|---|---|---|---|---|---|
| * Comparative Composition | | | | | | |

EXAMPLE 3: Sodium percarbonate particles when a diameter of about 315-1250 µm and a density of about 900 g/l were prepared by granulation from fine percarbonate particles together with sodium salt of glutaric acid, sodium disilicate and magnesium sulfate supplied as aqueous solutions. The granulation was performed by extruding a mixture of the ingredients, crushing the string formed, rounding the particles obtained on a rotating disk and drying and sieving the rounded particles. For comparative purposes one sample was prepared without glutaric acid and one sample was prepared with EDTA instead cf glutaric acid. The stability of the particles was tested in a standard IEC-Z detergent in the same way as in Example 1 and the results appear in the table below.

| SPC | GA | EDTA | SDS | MgSO₄ | AO | QSI |
|---|---|---|---|---|---|---|
| * 99.2% | - | - | 0.67% | 0.12% | 14.3% | 3.4 |
| * 99.0% | - | 0.2% | 0.67% | 0.12% | 14.4% | 3.1 |
| 99.0% | 0.2% | - | 0.67% | 0.12% | 14.4% | 2.6 |
| 98.8% | 0.5% | - | 0.63% | 0.12% | 14.2% | 2.1 |

| | | | | | | |
|---|---|---|---|---|---|---|
| * Comparative Composition | | | | | | |

EXAMPLE 4: Sodium percarbonate particles with a diameter of 315-1250 µm were coated with sodium salts of glutaric acid and/or glucoheptonic acid applied as aqueous solutions by spraying in a fluidized bed. For comparative purposes particles were also coated with benzoic acid and caproic acid. The stability of the particles was tested in a standard IEC-Z detergent in the same way as in Example 1 and the results appear in the table below.

| SPC | GA | GH | AO | QSI |
|---|---|---|---|---|
| * 100% | - | - | 14.5% | 5.66 |
| 95% | 5% | - | 13.6% | 0.65 |
| * 95% | - | 5% | 13.9% | 0.78 |
| 95% | 4% | 1% | 13.6% | 0.40 |
| 95% | 3% | 2% | 13.4% | 0.31 |
| 95% | 2% | 3% | 13.3% | 0.25 |
| 95% | 1% | 4% | 13.6% | 0.31 |
| * 95% | 5% benzoic acid | | 13.8% | 2.31 |
| * 95% | 5% caproic acid | | 13.9% | 2.27 |

| | | | | |
|---|---|---|---|---|
| * Comparative Composition | | | | |

EXAMPLE 5: Sodium percarbonate particles with a diameter of 315-1250 µm were coated by spraying in a fluidized bed with a first aqueous solution of sodium silicate (SiO₂:Na₂O ratio 1), sodium glucoheptonate and/or sodium salt of glutaric acid, and a second solution of magnesium sulfate and optionally sodium sulfate or sodium bicarbonate. In one experiment a third solution of sodium carbonate was applied. The stability of the particles was tested in a IEC-Z detergent in the same way as in Example 1 and the results appear in the table below:

| | Exp. 1 | Exp. 2 | Exp. 3 | Exp. 4 |
|---|---|---|---|---|
| sodium percarbonate | 85.1% | 85.1% | 85.1% | 85.1% |
| glucoheptonic acid | - | 0.75% | 0.75% | 0.75% |
| glutaric acid | 1.5% | 0.75% | 0.75% | 0.75% |
| sodium disilicate | 2% | 2% | 2% | 2% |
| MgSO₄ | 1.4% | 1.4% | 1.4% | 1.4% |
| Na₂SO₄ | 10% | 10% | | - |
| NaHCO₃ | - | - | 10% | - |
| Na₂CO₃ | - | - | - | 10% |
| active oxygen | 12.8% | 12.9% | 12.8% | 12.8% |
| QSI | 0.28 | 0.22 | 0 | 0.16 |

EXAMPLE 6: Sodium percarbonate particles prepared by granulation as in Example 3 contained 98.8% sodium percarbonate, 0.12% MgSO₄, 0.63% sodium disilicate, 0.5% glutaric acid (as sodium salt), and had a content of active oxygen of 14.2%. The particles were coated as in Examples 5 with 1.4% MgSO₄, 2% sodium disilicate, 10% Na₂CO₃, and 1% glutaric acid (as sodium salt). The coated particles contained 12.6% of active oxygen. The stability of the particles was tested in a IEC-Z detergent in the same way as in Example 1 and it was found that QSI for the uncoated particles was 2.20 and QSI for the coated particles was 0.04.

## Claims

1. Particles comprising a peroxy compound with capability of releasing hydrogen peroxide or peroxy acids in aqueous solutions, **characterised** in that the particles comprise up to 15% by weight of a dicarboxylic acid having from 5 to 10 carbon atoms or a salt thereof.

2. Particles as claimed in claim 1, **characterised** in that they comprise up to 10% by weight of a dicarboxylic acid having from 5 to 10 carbon atoms or a salt thereof.

3. Particles as claimed in anyone of the claims 1-2, **characterised** in that the particles comprise an alkali metal or alkaline earth metal salt of a dicarboxylic acid having from 5 to 10 carbon atoms.

4. Particles as claimed in anyone of the claims 1-3, **characterised** in that a dicarboxylic acid having from 5 to 10 carbon atoms or a salt thereof is mixed with the peroxy compound.

5. Particles as claimed in claim 4, **characterised** in that the peroxy compound and the dicarboxylic acid are granulated together.

6. Particles as claimed in anyone of the claims 1-5, **characterised** in that a dicarboxylic acid having 5 to 10 carbon atoms or a salt thereof is included in a coating.

7. Particles as claimed in anyone of the claims 1-6, **characterised** in that the dicarboxylic acid satisfies the formula:
COOH - R - COOH
in which R is alkylene or akenylene having from 3 to 8 carbon atoms.

8. Particles as claimed in claim 7, **characterised** in that R is a straight chain without branches.

9. Particles as claimed in claim 8, **characterised** in that the dicarboxylic acid is anyone of glutaric acid, adipic acid, pimelic acid, suberic acid, azelaic acid, sebacic acid or a mixture thereof.

10. Particles as claimed in claim 9, **characterised** in that the dicarboxylic acid is glutaric acid.

11. Particles as claimed in anyone of the claims 1-10, **characterised** in that the particles comprise silicate.

12. Particles as claimed in claim 11, **characterised** in that the particles comprise alkali metal silicate.

13. Particles as claimed in anyone of the claims 11-12, **characterised** in that silicate is mixed with the peroxy compound.

14. Particles as claimed in anyone of the claims 11-13, **characterised** in that silicate is included in a coating.

15. Particles as claimed in anyone of the claims 1-14, **characterised** in that they comprise a water soluble magnesium compound.

16. Particles as claimed in anyone of the claims 1-15, **characterised** in that the particles comprise a hydroxy carboxylic acid satisfying the formula:
R'CₙHₘ(OH)ₙCOOH
in which R' is CH₂OH or COOH, n is 2-6, and m is 0-n;
or salts thereof.

17. Particles as claimed in claim 16, **characterised** in that R' is CH₂OH, n is 4 or 5, and m is equal to n or n-2.

18. Particles as claimed in claim 17, **characterised** in that the hydroxy carboxylic acid is glucoheptonic acid.

19. Particles as claimed in anyone of the claims 1-18, **characterised** in that a hydroxy carboxylic acid or a salt as defined in anyone of the claims 16-18 is mixed with the peroxy compound.

20. Particles as claimed in anyone of the claims 1-19, **characterised** in that the hydroxy carboxylic acid or a salt as defined in anyone of the claims 16-18 is included in a coating.

21. Particles as claimed in anyone of the claims 1-20, **characterised** in that a dicarboxylic acid having from 5 to 10 carbon atoms and a hydroxy carboxylic acid as defined in anyone of the claims 16-18 are both mixed with the peroxy compound.

22. Particles as claimed in anyone of the claims 1-21, **characterised** in that a dicarboxylic acid having from 5 to 10 carbon atoms and a hydroxy carboxylic acid as defined in anyone of the claims 16-18 are both included in a coating.

23. Particles as claimed in anyone of the claims 1-22, **characterised** in that the peroxy compound is alkali metal percarbonate.

24. Particles as claimed in anyone of the claims 1-23, **characterised** in that the bulk density is from 800 to 1500 g/l.

25. Particles as claimed in claim 24, **characterised** in that the bulk density is from 800 to 1100 g/l.

26. Use of particles according to anyone of the claims 1-25 as a bleaching agent in detergents.

27. Composition comprising an inert filler, and/or one or several substances active at washing, which composition further contains particles according to anyone of the claims 1-25.

28. Detergent composition comprising particles according to anyone of the claims 1-25.

29. Detergent composition as claimed in claim 28, **characterised** in that it comprises zeolite as a builder.

## Patentansprüche

1. Teilchen, umfassend eine Peroxyverbindung mit der Fähigkeit Wasserstoffperoxid oder Peroxysäuren in wäßrigen Lösungen freizusetzen, dadurch gekennzeichnet, daß die Teilchen bis zu 15 Gew.-% einer Dicarbonsäure mit 5 bis 10 Kohlenstoffatomen oder ein Salz davon umfassen.

2. Teilchen nach Anspruch 1, dadurch gekennzeichnet, daß sie bis zu 10 Gew.-% einer Dicarbonsäure mit 5 bis 10 Kohlenstoffatomen oder ein Salz davon umfassen.

3. Teilchen nach einem der Ansprüche 1-2, dadurch gekennzeichnet, daß die Teilchen ein Alkalimetall- oder Erdalkalimetallsalz einer Dicarbonsäure mit 5 bis 10 Kohlenstoffatomen umfassen.

4. Teilchen nach einem der Ansprüche 1-3, dadurch gekennzeichnet, daß eine Dicarbonsäure mit 5 bis 10 Kohlenstoffatomen oder ein Salz davon mit der Peroxyverbindung gemischt ist.

5. Teilchen nach Anspruch 4, dadurch gekennzeichnet, daß die Peroxyverbindung und die Dicarbonsäure zusammen granuliert sind.

6. Teilchen nach einem der Ansprüche 1-5, dadurch gekennzeichnet, daß eine Dicarbonsäure mit 5 bis 10 Kohlenstoffatomen oder ein Salz davon in einer Beschichtung enthalten ist.

7. Teilchen nach einem der Ansprüche 1-6_{,} dadurch gekennzeichnet, daß die Dicarbonsäure der Formel:
COOH-R-COOH
entspricht, wobei R einen Alkylen- oder Alkenylenrest mit 3 bis 8 Kohlenstoffatomen bedeutet.

8. Teilchen nach Anspruch 7, dadurch gekennzeichnet, daß R eine gerade Kette ohne Verzweigungen ist.

9. Teilchen nach Anspruch 8, dadurch gekennzeichnet, daß die Dicarbonsäure Glutarsäure, Adipinsäure, Pimelinsäure, Suberinsäure, Azelainsäure, Sebacinsäure oder ein Gemisch davon ist.

10. Teilchen nach Anspruch 9, dadurch gekennzeichnet, daß die Dicarbonsäure Glutarsäure ist.

11. Teilchen nach einem der Ansprüche 1-10, dadurch gekennzeichnet, daß die Teilchen ein Silikat umfassen.

12. Teilchen nach Anspruch 11, dadurch gekennzeichnet, daß die Teilchen ein Alkalimetallsilikat umfassen.

13. Teilchen nach einem der Ansprüch 11-12, dadurch gekennzeichnet, daß das Silikat mit der Peroxyverbindung gemischt ist.

14. Teilchen nach einem der Ansprüche 11-13, dadurch gekennzeichnet, daß das Silikat in einer Beschichtung enthalten ist.

15. Teilchen nach einem der Ansprüche 1-14, dadurch gekennzeichnet, daß sie eine in Wasser lösliche Magnesiumverbindung umfassen.

16. Teilchen nach einem der Ansprüche 1-15, dadurch gekennzeichnet, daß die Teilchen eine Hydroxycarbonsäure umfassen, die der Formel:
R'CₙHₘ(OH)ₙCOOH
entspricht, wobei R' CH₂OH oder COOH ist, n 2-6 bedeutet, und m O-n ist; oder Salze davon.

17. Teilchen nach Anspruch 16, dadurch gekennzeichnet, daß R' der Rest CH₂OH bedeutet, n gleich 4 oder 5 ist, und m gleich n oder n-2 ist.

18. Teilchen nach Anspruch 17, dadurch gekennzeichnet, daß die Hydroxycarbonsäure Glucoheptonsäure ist.

19. Teilchen nach einem der Ansprüche 1-18, dadurch gekennzeichnet, daß eine Hydroxycarbonsäure oder ein Salz davon, die in einem der Ansprüche 16-18 bezeichnet ist, mit der Peroxyverbindung gemischt ist.

20. Teilchen nach einem der Ansprüche 1-19, dadurch gekennzeichnet, daß die Hydroxycarbonsäure oder ein Salz davon, die in einem der Ansprüche 16-18 bezeichnet ist, in einer Beschichtung enthalten ist.

21. Teilchen nach einem der Ansprüche 1-20, dadurch gekennzeichnet, daß eine Dicarbonsäure mit 5 bis 10 Kohlenstoffatomen und eine Hydroxycarbonsäure, die in einem der Ansprüche 16-18 bezeichnet ist, zusammen mit der Peroxyverbindung gemischt sind.

22. Teilchen nach einem der Ansprüche 1-21, dadurch gekennzeichnet, daß eine Dicarbonsäure mit 5 bis 10 Kohlenstoffatomen und eine Hydroxycarbonsäure, die in einem der Ansprüche 16-18 bezeichnet ist, beide in einer Beschichtung enthalten sind.

23. Teilchen nach einem der Ansprüche 1-22, dadurch gekennzeichnet, daß die Peroxyverbindung ein Alkalimetallpercarbonat ist.

24. Teilchen nach einem der Ansprüche 1-23, dadurch gekennzeichnet, daß die Schüttdichte 800 bis 1500 g/l beträgt.

25. Teilchen nach Anspruch 24, dadurch gekennzeichnet, daß die Schüttdichte 800 bis 1100 g/l beträgt.

26. Verwendung der Teilchen nach einem der Ansprüche 1-25 als Bleichmittel in Detergentien.

27. Zusammensetzung, umfassend einen inerten Füllstoff und/oder eine oder mehrere waschaktive Substanzen, wobei die Zusammensetzung weiterhin Teilchen nach einem der Anpsrüche 1- 25 enthält.

28. Waschmittelzusammensetzung, umfassend Teilchen nach einem der Ansprüche 1-25.

29. Waschmittelzusammensetzung nach Anspruch 28, dadurch gekennzeichnet, daß sie Zeolith als Builder umfaßt.

## Revendications

1. Particules comprenant un peroxyde présentant une aptitude à libérer du peroxyde d'hydrogène ou des peroxyacides dans des solutions aqueuses, caractérisées en ce que les particules comprennent jusqu'à 15 % en poids d'un acide dicarboxylique comportant de 5 à 10 atomes de carbone, ou d'un sel de ce dernier.

2. Particules selon la revendication 1, caractérisées en ce qu'elles comprennent jusqu'à 10 % en poids d'un acide dicarboxylique comportant de 5 à 10 atomes de carbone, ou d'un sel de ce dernier.

3. Particules selon l'une quelconque des revendications 1 et 2, caractérisées en ce que les particules comprennent un sel de métal alcalin ou de métal alcalino-terreux d'un acide dicarboxylique comportant de 5 à 10 atomes de carbone.

4. Particules selon l'une quelconque des revendications 1 à 3, caractérisées en ce que l'on mélange un acide dicarboxylique comportant de 5 à 10 atomes de carbone, ou un sel de ce dernier, avec le peroxyde.

5. Particules selon la revendication 4, caractérisées en ce que le peroxyde et l'acide dicarboxylique sont granulés.

6. Particules selon l'une quelconque des revendications 1 à 5, caractérisées en ce qu'un acide dicarboxylique comportant de 5 à 10 atomes de carbone ou un sel de ce dernier est compris dans un revêtement.

7. Particules selon l'une quelconque des revendications 1 à 6, caractérisées en ce que l'acide dicarboxylique répond à la formule :
HOOC-R-COOH
dans laquelle R représente un groupe alkylène ou alcénylène comportant de 3 à 8 atomes de carbone.

8. Particules selon la revendication 7, caractérisées en ce que R représente une chaîne droite sans ramification.

9. Particules selon la revendication 8, caractérisées en ce que l'acide dicarboxylique est l'un quelconque des acide glutarique, acide adipique, acide pimélique, acide subérique, acide azélaique, acide sébacique, ou un mélange de ces derniers.

10. Particules selon la revendication 9, caractérisées en ce que l'acide dicarboxylique est l'acide glutarique.

11. Particules selon l'une quelconque des revendications 1 à 10, caractérisées en ce que les particules comprennent un silicate.

12. Particules selon la revendication 11, caractérisées en ce que les particules comprennent un silicate de métal alcalin.

13. Particules selon l'une quelconque des revendications 11 et 12, caractérisées en ce que l'on mélange le silicate avec le peroxyde.

14. Particules selon l'une quelconque des revendications 11 à 13, caractérisées en ce que le silicate est compris dans un revêtement.

15. Particules selon l'une quelconque des revendications 1 à 14, caractérisées en ce qu'elles comprennent un composé de magnésium hydrosoluble.

16. Particules selon l'une quelconque des revendications 1 à 15, caractérisées en ce que les particules comprennent un acide carboxylique hydroxylé répondant à la formule :
R'CₙHₘ(OH)ₙCOOH
dans laquelle R' représente CH₂OH ou COOH, n vaut 2 à 6 et m vaut 0 à n ; ou des sels de ce dernier.

17. Particules selon la revendication 16, caractérisées en ce que R' représente CH₂OH, n vaut 4 ou 5, et m est égal à n ou à n-2.

18. Particules selon la revendication 17, caractérisées en ce que l'acide carboxylique hydroxylé est l'acide glucoheptonique.

19. Particules selon l'une quelconque des revendications 1 à 18, caractérisées en ce que l'on mélange un acide carboxylique hydroxylé ou un sel tels que définis dans l'une quelconque des revendications 16 à 18, avec le peroxyde.

20. Particules selon l'une quelconque des revendications 1 à 19, caractérisées en ce qu'un acide carboxylique hydroxylé ou un sel tels que définis dans l'une quelconque des revendications 16 à 18, est compris dans un revêtement.

21. Particules selon l'une quelconque des revendications 1 à 20, caractérisées en ce que l'on mélange à la fois un acide dicarboxylique comportant de 5 à 10 atomes de carbone et un acide carboxylique hydroxylé tel que défini dans l'une quelconque des revendications 16 à 18, avec le peroxyde.

22. Particules selon l'une quelconque des revendications 1 à 21, caractérisées en ce qu'un acide dicarboxylique comportant de 5 à 10 atomes de carbone et un acide carboxylique hydroxylé tel que défini dans l'une quelconque des revendications 16 à 18, sont tous les deux compris dans un revêtement.

23. Particules selon l'une quelconque des revendications 1 à 22, caractérisées en ce que le peroxyde est un percarbonate de métal alcalin.

24. Particules selon l'une quelconque des revendications 1 à 23, caractérisées en ce que la masse volumique en vrac vaut de 800 à 1500 g/l.

25. Particules selon la revendication 24, caractérisées en ce que la masse volumique en vrac vaut de 800 à 1100 g/l.

26. Utilisation des particules selon l'une quelconque des revendications 1 à 25, en tant qu'agent de blanchiment dans des détergents.

27. Composition comprenant une charge inerte et/ou une ou plusieurs substances actives au lavage, laquelle composition contient en outre des particules selon l'une quelconque des revendications 1 à 25.

28. Composition détergente comprenant des particules selon l'une quelconque des revendications 1 à 25.

29. Composition détergente selon la revendication 28, caractérisée en ce qu'elle comprend une zéolithe comme adjuvant.
